# EUROPEAN PATENT APPLICATION

(11) **EP 4 815 160 A1**
(43) Date of publication of application: **30.09.2026**
(21) Application number: 25872604.1
(22) Date of filing: 30.09.2025
(51) Int. Cl.: H01M 50/342

(54) **BATTERY PACK**

(30) Priority: 30.09.2024 CN 202422418817 U
(71) Applicant: Sunwoda Mobility Energy Technology Co., Ltd., Shenzhen, Guangdong 518107 (CN)
(72) Inventor: LUO, Zheng, Shenzhen, Guangdong 518107 (CN); SUN, Jinjie, Shenzhen, Guangdong 518107 (CN)
(74) Representative: Bewley, Ewan Stuart
(86) International application number: PCT/CN2025/125921
(87) International publication number: WO 2026/067849

(57) **Abstract**

The present application discloses a battery pack, comprising a battery pack casing, a partition member for separating an inner space of the battery pack into a battery chamber and a venting channel, and a thermal runaway protection member. A through hole that communicates the battery chamber with the venting channel is formed in the partition member, and the thermal runaway protection member covers the through hole and comprises a protection portion and a weakened portion. The protection portion comprises a connection portion used for connecting to the partition member and a deformable portion connected to the inner periphery of the connection portion.

## Description

### TECHNICAL FIELD

The present disclosure relates to the field of battery technologies, and in particular to a battery pack.

### BACKGROUND

A conventional battery pack generally includes a plurality of battery cells. An explosion-proof valve is provided on each battery cell. When a battery cell experiences thermal runaway due to overcharging, short circuits, or overheating, the internal pressure of the battery cell increases. When the internal pressure reaches an opening threshold of the explosion-proof valve, the explosion-proof valve breaks to allow ejected materials (e.g., high-temperature and high-pressure gases, molten materials, etc.) to escape, preventing an explosion due to excessive internal pressure.

If the ejected materials spread between other battery cells, the high temperature and high pressure of the ejected materials will affect the stability of these other cells, and even cause thermal propagation and other safety issues. To address this problem, a venting channel is designed in conventional technologies to disperse the ejected materials and prevent the high temperature and high pressure of the ejected materials from affecting other battery cells. In conventional technologies, a partition member is provided to separate the venting region from the space where the battery cells (battery core) are mounted, allowing the ejected materials to enter the venting channel when the explosion-proof valve of one of the battery cells breaks.

However, the ejected materials are electrically conductive, and are likely to cause an internal short circuit of the battery pack upon contact with other charged objects, resulting in a more severe chain reaction of thermal runaway. Therefore, when the partition member is a metal member, insulation treatment needs to be performed on both surfaces of the partition member. However, conventional processes cannot guarantee that the wall of the venting hole is completely covered with an insulating layer, which still poses a risk of short circuit.

### SUMMARY

A technical concern to be addressed by the present disclosure is how to solve the problem in conventional technologies that the metal partition member has a risk of short circuit because the wall of the venting hole on the metal partition member cannot be completely insulated.

To address the above technical concern, the present disclosure provides a battery pack, including:
a battery pack casing, where a battery cell is arranged in the battery pack casing, and the battery cell is provided with an explosion-proof valve;
a partition member, where the partition member is arranged in the battery pack casing and is configured to partition an interior of the battery pack casing into a battery chamber and a venting channel, the partition member is provided with a through hole in communication with the battery chamber and the venting channel, and the battery cell is arranged in the battery chamber; and
a thermal runaway protection member, arranged on a side of the partition member close to the battery chamber and configured to cover the through hole, where the thermal runaway protection member includes a protection portion and a weakened portion, the weakened portion is arranged corresponding to the explosion-proof valve,
the protection portion includes a connection portion and a deformable portion, the deformable portion is connected to an outer periphery of the weakened portion, the connection portion is connected to an outer periphery of the deformable portion, the connection portion is connected to the partition member, and a side of the connection portion away from the deformable portion is connected to the partition member;
when internal pressure of the battery cell is released, ejected materials from the battery cell are discharged into the venting channel through the explosion-proof valve, the weakened portion, and the through hole, and cause the deformable portion to deform to cover a wall of the through hole.

In some embodiments, the term "cover" means that the through hole is covered and/or blocked by the thermal runaway protection member.

Further preferably, an orthographic projection of the weakened portion on the partition member is located within the corresponding through hole.

Further preferably, the weakened portion and the explosion-proof valve each have an orthographic projection on the partition member in a thickness direction of the partition member, and the orthographic projection of the weakened portion is located within the orthographic projection of the explosion-proof valve.

Further preferably, an orthographic projection of the deformable portion on the partition member in a thickness direction of the partition member is located within the through hole.

Further preferably, the deformable portion and the explosion-proof valve each have an orthographic projection on the partition member in the thickness direction of the partition member, the orthographic projection of the deformable portion is annular, and a distance between an inner periphery of the orthographic projection of the deformable portion and an outer periphery of the orthographic projection of the explosion-proof valve in a radial direction of the through hole is defined as D1, where 0.5 mm≤D1≤3 mm.

Further preferably, a length by which the deformable portion extends toward a middle portion of the through hole in a radial direction of the through hole is equal to or greater than a thickness of the wall of the through hole, enabling the deformable portion to completely cover the wall of the through hole after deformation.

Further preferably, in the radial direction of the through hole, a length by which the deformable portion extending toward the middle portion of the through hole is defined as L1, where 1 mm≤L1≤7 mm;
and/or
the partition member has a thickness defined as L2, where 1 mm≤L2≤7 mm.

Further preferably, an area of an orthographic projection of the deformable portion in the through hole is larger than an area of the wall of the through hole.

Further preferably, the protection portion and the weakened portion are integrally formed, a score is provided at a connection between the weakened portion and the protection portion, and the weakened portion is configured to be broken along the score when the internal pressure of the battery cell is released.

Further preferably, a score is provided in a middle region of the weakened portion, and the weakened portion is configured to be broken along the score when the internal pressure of the battery cell is released.

Further preferably, the score is a closed score or a non-closed score.

Further preferably, a crease is provided at a junction of the connection portion and the deformable portion, and the deformable portion is deformable along the crease.

Further preferably, a projection of the crease coincides with an edge of the through hole in a direction in which the thermal runaway protection member is orthogonally projected on the partition member.

Further preferably, the through hole is a polygonal hole, and the crease includes a plurality of linear segments.

Further preferably, the crease is provided on a side of the thermal runaway protection member facing the through hole, and the crease has a thickness less than a thickness of the deformable portion and/or a thickness of the connection portion.

Further preferably, the thermal runaway protection member is an insulating, high-temperature-resistant protection member.

Further preferably, the insulating, high-temperature-resistant protection member is made of a ceramic material, a fiber material, or a silicate material.

Further preferably, the partition member is a liquid cooling plate.

Compared with the existing technology, the battery pack of the present disclosure have the following advantages.

In the battery pack provided by the present disclosure, the interior of the battery pack is partitioned into the battery chamber and the venting channel by the partition member, the through holes in communication with the battery chamber and the venting channel are provided on the partition member, the thermal runaway protection member is provided to cover the through holes, and the thermal runaway protection member is configured to include the protection portion and the weakened portion. When thermal runaway occurs in the battery cell, the weakened portion is broken to form an opening, allowing ejected materials to smoothly pass through the opening and enter the venting channel. Because the protection portion includes the connection portion and the deformable portion, the deformable portion can cover the wall of the through hole when thermal runaway occurs, to reduce the risk of short circuit caused by contact between high-temperature and high-pressure ejected materials and the wall, thereby improving the safety of the battery pack.

### BRIEF DESCRIPTION OF DRAWINGS

FIG. 1 is a schematic structural diagram of a thermal runaway protection member according to the present disclosure.
FIG. 2 is a schematic structural diagram of a second score according to the present disclosure.
FIG. 3 is a schematic structural diagram of a thermal runaway protection member and a partition member according to the present disclosure.
FIG. 4 is a schematic enlarged view of part A in FIG. 3 according to the present disclosure.
FIG. 5 is a schematic structural diagram of a battery pack according to the present disclosure.
FIG. 6 is a partial cross-sectional view of a battery pack according to the present disclosure.
FIG. 7 is an assembled view of a battery cell, a partition member, and a thermal runaway protection member according to the present disclosure.

In the drawings, the reference numerals respectively represent:
10, thermal runaway protection member; 11, protection portion; 111, connection portion; 112, deformable portion; 113, crease; 12, weakened portion; 13, score; 131, first score; 132, second score;
20, battery pack casing; 21, battery cell; 211, explosion-proof valve; 22, battery chamber; 23, venting channel;
30, partition member; 31, through hole.

### DETAILED DESCRIPTION

The present disclosure will be described in further detail with reference to the accompanying drawings and embodiments. The following embodiments are used for illustrating the present disclosure, and are not intended to limit the scope of the present disclosure.

In the description of the present disclosure, it should be understood that, terms such as "central," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial" and "peripheral" should be construed to refer to the orientation as then described or as shown in the drawings under discussion. These relative terms are for convenience of description and do not require that the present disclosure be constructed or operated in a particular orientation, therefore cannot be construed to limit the present disclosure.

Terms such as "first," "second" and the like used in the embodiments of the present disclosure are merely for descriptive purposes, and shall not be construed as indicating or implying relative importance, or implicitly specifying the quantity of indicated technical features in the embodiments. Therefore, a feature defined by terms such as "first" and "second" in the embodiments of the present disclosure may explicitly or implicitly indicate that the embodiment includes at least one such feature. In the description of the present disclosure, the term "a plurality of/multiple" means at least two, such as two, three, and the like, unless otherwise expressly and specifically defined in the embodiments.

Furthermore, unless specified or limited otherwise, the terms "mounted," "connected," "coupled," and the like are used broadly, and may be, for example, fixed connections, detachable connections, or integral connections; may also be mechanical connections, or electric connections; may also be direct connections, or indirect connections via intervening structures; may also be inner communications of two elements. The specific meaning of the above terms within the present disclosure may be understood by those having ordinary skills in the art according to particular circumstances.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on" , "above" or "on top of" a second feature may include an embodiment in which the first feature is right or obliquely "on" , "above" or "on top of" the second feature, or just means that the first feature is at a height higher than that of the second feature; while a first feature "below," "under" or "on bottom of" a second feature may include an embodiment in which the first feature is right or obliquely "below," "under" or "on bottom of" the second feature, or just means that the first feature is at a height lower than that of the second feature.

It should be noted that when an element is referred to as being "fixed to" or "disposed on" another element, it may be directly arranged on the other element, or an intermediate element may be arranged therebetween. When an element is referred to as being "connected" to another element, it may be directly connected to the other element, or an intermediate element may be present therewith. The terms "vertical," "horizontal," "upper," "lower," "left," "right" and similar expressions used herein are merely for descriptive purposes and are not intended to represent the only embodiment.

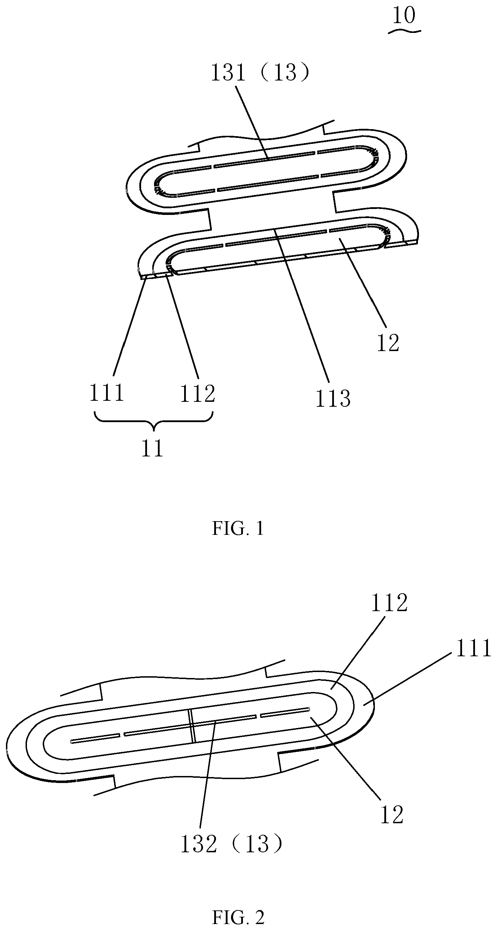

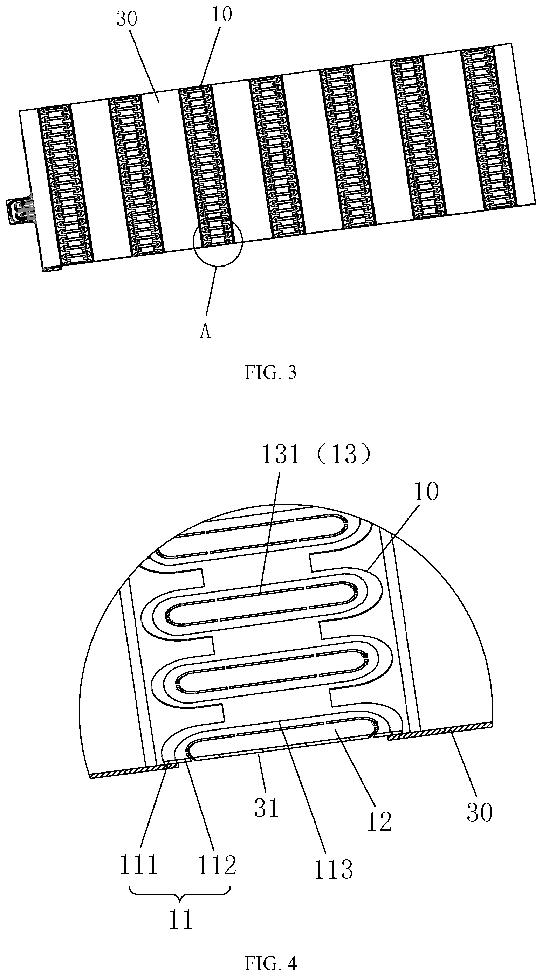

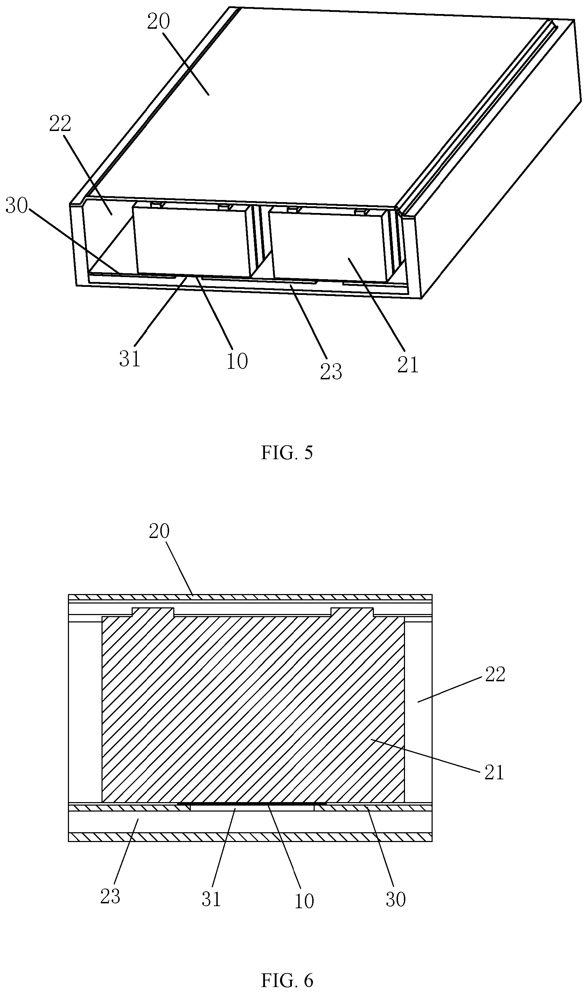

As shown in FIG. 1 to FIG. 7, an embodiment of the present disclosure provides a battery pack, which includes a battery pack casing 20, a partition member 30, and a thermal runaway protection member 10.

In some embodiments, battery cells 21 are arranged in the battery pack casing 20, and the battery cells 21 are each provided with an explosion-proof valve 211. The battery pack casing 20 is generally a box structure formed by an upper cover, a bottom plate, and a frame. The partition member 30 is arranged in the battery pack casing 20. The partition member 30 is configured to partition an interior the battery pack casing 20 into a battery chamber 22 and a venting channel 23. The battery chamber 22 is configured for accommodating the battery cells 21. The venting channel 23 is configured to vent ejected materials from the battery cell 21 instantly when thermal runaway occurs in the battery cell 21, to avoid a more severe chain reaction of thermal runaway.

In some embodiments, the partition member 30 is provided with through holes 31 in communication with the battery chamber 22 and the venting channel 23, the thermal runaway protection member 10 is arranged in the battery chamber 22 and connected to the partition member 30, and the thermal runaway protection member 10 is configured to cover the corresponding through hole 31 when thermally runaway occurs in the corresponding battery cell 21.

In some embodiments, the thermal runaway protection member 10 includes a protection portion 11 and a weakened portion 12, the protection portion 11 is formed surrounding the weakened portion 12, and the weakened portion 12 is configured to be broken when the internal pressure of the corresponding battery cell 21 is released. The weakened portion 12 is configured to be more easily broken through or ruptured to form an opening during the venting of the battery cell 21, allowing the ejected materials to smoothly pass through the opening and enter the venting channel 23, thereby avoiding a situation where the pressure relief valve should be ruptured but the protection member cannot be broken. The protection portion 11 functions to connect the weakened portion 12 and the partition member 30, and can prevent the ejected materials from escaping from the gap between the battery cell 21 and the partition member 30 to affect other normal battery cells 21.

The protection portion 11 includes a connection portion 111 and a deformable portion 112. The deformable portion 112 is connected to an outer periphery of the weakened portion 12. The connection portion 111 is connected to an outer periphery of the deformable portion 112, and a side of the connection portion 111 away from the deformable portion 112 is connected to the partition member 30.

The weakened portion 12 is arranged corresponding to the through hole 31, and the explosion-proof valve 211 of the battery cell 21 is arranged corresponding to the weakened portion 12. When the internal pressure of the battery cell 21 is released, the weakened portion 12 allows the ejected materials from the battery cell 21 to be discharged to the venting channel 23 through the through hole 31, causing the deformable portion 112 to deform to at least partially cover a wall of the through hole 31.

The deformable portion 112 being deformed under pressure to cover the wall of the through hole 31 means that the deformable portion 112 can block the wall in a radial direction extending from a central axis of the through hole 31to the wall, including a case where the deformable portion 112 completely tightly adheres to the wall, a case where the deformable portion 112 is bent but is spaced part from the wall by a gap, etc.

In the battery pack provided by the present disclosure, the interior of the battery pack is partitioned into the battery chamber 22 and the venting channel 23 by the partition member 30, the through holes 31 in communication with the battery chamber 22 and the venting channel 23 are provided on the partition member 30, the thermal runaway protection member 10 is provided to cover the through holes 31, and the thermal runaway protection member 10 is configured to include the protection portion 11 and the weakened portion 12. When thermal runaway occurs in the battery cell 21, the weakened portion 12 is broken to form an opening, allowing ejected materials to smoothly pass through the opening and enter the venting channel 23. Because the protection portion 11 includes the connection portion 111 and the deformable portion 112, the deformable portion 112 can cover the wall of the through hole 31 when thermal runaway occurs, to reduce the risk of short circuit caused by contact between high-temperature and high-pressure ejected materials and the wall, thereby improving the safety of the battery pack.

In some embodiments, an orthographic projection of each of the weakened portions 12 on the partition member 30 is located within the corresponding through hole 31, and an orthographic projection of the explosion-proof valve 211 of each battery cell 21 on the partition member 30 is located within the corresponding weakened portion 12. As such, once the weakened portion 12 is broken when the internal pressure of the battery cell is released, the ejected materials from the battery cell 21 can be discharged into the venting channel 23 through the through hole 31 instantly, to avoid a more server chain reaction of thermal runaway.

Further, each of the weakened portion 12 and the explosion-proof valve 211 has an orthographic projection on the partition member 30 in a thickness direction of the partition member 30, and the orthographic projection of the weakened portion 12 is located within the orthographic projection of the explosion-proof valve 211. An area of the projection of the weakened portion 12 is smaller than an area of the projection of the explosion-proof valve 211, and the two projections are in correspondence with each other. Such a configuration ensures that when the explosion-proof valve 211 is actuated, the weakened portion 12 is impacted and ruptured, and can be successfully broken through.

In some embodiments, the protection portion 11 includes a connection portion 111 configured to be connected to the partition member 30 and a deformable portion 112 configured to be connected to an inner periphery of the connection portion 111. The weakened portion 12 is connected to an inner periphery of the deformable portion 112 and is arranged corresponding to the explosion-proof valve 211 of the battery cell 21, so that when the internal pressure of the battery cell 21 is released, the weakened portion 12 can be broken to allow the ejected materials from the battery cell 21 to be discharged through the through hole 31. In addition, the deformable portion 112 is a closed-loop structure, and the deformable portion 112 protrudes from the through hole in the radial direction of the through hole 31 to form a protruding annular peripheral edge. The deformable portion 112 is configured to be deformed toward the through hole under pressure to cover the wall of the through hole 31 when the explosion-proof valve 211 is ruptured. Because the protection portion 11 includes the connection portion 111 and the deformable portion 112, the deformable portion 112 can be deformed to form a protruding annular peripheral edge to completely cover the wall of the through hole 31 when thermal runaway occurs, to reduce the risk of short circuit caused by contact between high-temperature and high-pressure ejected materials and the wall, thereby improving the safety of the battery pack.

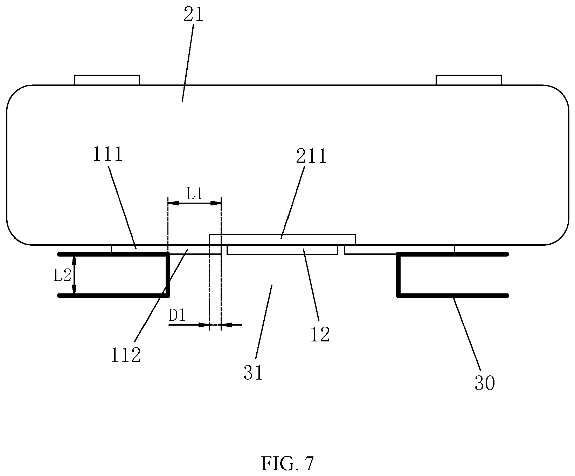

The deformable portion 112 and the explosion-proof valve 211 each have an orthographic projection on the partition member 30, and an inner periphery of the orthographic projection of the deformable portion 112 is located within the orthographic projection of the explosion-proof valve 211. A distance between the inner periphery of the orthographic projection of the deformable portion 112 and an outer periphery of the orthographic projection of the explosion-proof valve 211 in the radial direction of the through hole 31 is defined as D1 (as shown in FIG. 7), and D1 satisfies 0.5 mm≤D1≤3 mm.

For example, D1 may be 0.5 mm, 0.8 mm, 1 mm, 1.2 mm, 1.5 mm, 2 mm, 2.5 mm, or 3 mm. The distance D1 represents a radial distance by which the deformable portion 112 protrudes from the explosion-proof valve 211. If the distance is too small, the deformable portion 112 cannot be effectively impacted when the explosion-proof valve 211 is ruptured, resulting in insufficient deformation of the deformable portion 112. If the distance is too large, the rupturing of the explosion-proof valve 211 may be obstructed, resulting in poor thermal runaway venting of the battery cell 21.

In some embodiments, a crease 113 is provided at a junction of the connection portion 111 and the deformable portion 112, so that the deformable portion 112 can be bent along the crease 113 under the impact of the gas flow and ejected materials from the battery cell 21 when the explosion-proof valve 211 is ruptured. The deformable portion 112 may be made of an elastic material, so that the deformable portion 112 automatically returns to its initial state after the venting. Alternatively, the deformable portion 112 may be made of a rigid material, so that the deformable portion 112 remains in a bent state after the venting.

In some embodiments, to further improve the effect of deformation of the deformable portion 112 when thermal runaway occurs in the battery cell 21, a projection of the crease 113 coincides with an edge of the through hole 31 in a direction in which the thermal runaway protection member 10 is orthogonally projected on the partition member 30, so that the deformable portion 112 can be rapidly deformed under pressure to form a protruding annular peripheral edge to completely cover the wall of the through hole 31.

In some embodiments, the through hole 31 may be a circular hole, an elliptical hole, or a polygonal hole. When the through hole 31 is a circular hole, the crease 113 is a circular crease. When the through hole 31 is an elliptical hole, the crease 113 is an elliptical crease. When the through hole 31 is a polygonal hole, the crease 113 includes a plurality of linear segments.

In some embodiments, the crease 113 is formed by thinning a side of the thermal runaway protection member 10 facing the through hole 31, so that the deformable portion 112 can be rapidly deformed under pressure to cover the wall of the through hole 31, to reduce the risk of short circuit caused by contact between high-temperature and high-pressure ejected materials and the wall, thereby improving the safety of the battery pack.

In some embodiments, referring to FIG. 1, the protection portion 11 and the weakened portion 12 are integrally formed to form a sheet-like structure, a score 13 is provided at a connection between the weakened portion 12 and the protection portion 11, and the weakened portion 12 is configured to be broken along the score 13 when the internal pressure of the battery cell 21 is released.

In some embodiments, a score 13 is formed between the protection portion 11 and the weakened portion 12. In this case, the score 13 is a first score 131, and the purpose of providing the first score 131 is to allow the weakened portion 12 to be ruptured as the weakest position under pressure, so that the ejected materials can be instantly discharged into the venting channel 23.

In some embodiments, the first score 131 is a closed score or a non-closed score. Through the configuration of the closed score, the weakened portion can be completely ruptured, allowing the ejected materials to flow more rapidly, thereby effectively reducing the impact on the temperature of other battery cells. Through the configuration of the non-closed score, a part of the weakened portion 12 is still connected to the protection portion 11 after the weakened portion 12 is broken through, which can prevent the weakened portion 12 from detaching and falling into the venting channel 23 to affect the flow of the ejected materials, and facilitate future maintenance.

If the explosion-proof valve is divided into a rupture region and a non-rupture region, a score is used as a boundary between the rupture region and the non-rupture region. A closed score means that the rupture region and the non-rupture region are completely separated by the score. A non-closed score means that the rupture region and the non-rupture region are not completely separated, and the rupture region and the non-rupture region are still partially connected.

Referring to FIG. 2, in some embodiments, a score 13 is provided in a middle region of the weakened portion 12, and the weakened portion 12 is configured to be broken along the score 13 when the internal pressure of the battery cell 21 is released. In this case, the score 13 is a second score 132. Such a configuration allows the weakened portion 12 to be easily broken through along the second score 132 when the internal pressure of the battery cell 21 is released, so that the ejected materials can enter the venting channel 23 through the through hole 31, thereby preventing the high temperature and high pressure of the ejected materials from affecting other battery cells.

It should be noted that because the protection portion 11 and the weakened portion 12 are connected as one piece, the weakened portion 12 will not be completely detached from the protection portion 11 when the weakened portion 12 is broken along the score 13 in the middle region, but instead, a part of the weakened portion 12 is still connected to the protection portion 11, in which case the blocking of the wall of the through hole 31 is still achieved by the deformable portion 112.

The second score 132 is cross-shaped (as shown in FIG. 2) or C-shaped. It should be noted that the second score 132 may also have other polygonal shapes, such as a triangle, a rectangle, a pentagon, etc. Some improvements and replacements can be made by those skilled in the art without departing from the technical principles of the present disclosure, which are also contemplated to be within the protection scope of the present disclosure.

In some embodiments, the second score 132 is a closed score or a non-closed score.

In some embodiments, the thermal runaway protection member 10 is an insulating, high-temperature-resistant protection member, so that the connection portion 111 and the deformable portion 112 of the protection portion 11 can effectively provide an insulating protection effect around the through hole 31 on the partition member 30.

In some embodiments, because the deformable portion 112 will form a protruding annular peripheral edge after deformation, the insulating, high-temperature-resistant protective member is preferably made of a ceramic material, a fiber material, or a silicate material, e.g., foam, ceramic silicone, glass fiber, etc., in order to prevent the deformable portion 112 from cracking under high temperature and high pressure and losing its protective effect on the inner wall of the through hole 31. The deformable portion 112 is bent along the crease 113 to cover the wall of the through hole 31 under the impact of the gas flow and ejected materials from the battery cell 21 when the explosion-proof valve 211 is ruptured, thereby providing an insulating protection effect.

In some embodiments, it should be noted that both surfaces of two sides of the partition member 30 need to be subjected to insulation treatment, so as to prevent ejected materials from contacting the two surfaces of the partition member 30 during ejection or rebound, thereby avoiding a more severe short-circuit risk.

In some embodiments, the connection portion 111 is fixedly connected to the partition member 30, to prevent the thermal runaway protection member 10 from being displaced during venting of the battery cell 21 due to thermal runaway, and ensure that the explosion-proof valve 211 of the battery cell 21, the weakened portion 12, and the through hole 31 on the partition member 30 are always in a straight line, thereby ensuring that the deformable portion 112 can be deformed to form a protruding annular peripheral edge to cover the wall of the through hole 31.

In some embodiments, the partition member 30 is adhered to a bottom wall of the battery cell 21 with a structural adhesive (sealing layer), and the thermal runaway protection member 10 has a certain height to prevent the adhesive from flowing to between the explosion-proof valve 211 of the battery cell 21 and the through hole 31. The arrangement of the structural adhesive (sealing layer) can achieve the fixed connection of the battery cell 21, and ensure the sealing performance during venting of the battery cell 21, to prevent the ejected materials from leaking through the connection between the battery cell 21, the thermal runaway protection member and the partition member 30, and entering into other spaces to affect other battery cells 21 or components nearby, thereby reducing the occurrence of fire or thermal propagation.

In some embodiments, the deformable portion 112 extends from an edge of the through hole 31 to the middle portion of the through hole 31, and a length by which the deformable portion 112 extends from the edge of the through hole 31 to the middle portion of the through hole 31 is greater than a thickness of the wall of the through hole 31. As such, the deformable portion 112 can block the wall of the through hole 31 to a certain extent, and on the other hand, the deformable portion 112 can be deformed to form a protruding annular peripheral edge that can cover the wall of the through hole 31. By such a configuration, because the explosion-proof valve 211 of the battery cell 21 is arranged corresponding to the weakened portion 12 and the weakened portion 12 is arranged corresponding to the through hole 31, the deformable portion 112 can be deformed toward one side of the through hole 31 under pressure to form a protruding annular peripheral edge that can cover the wall of the through hole 31, thus insulating the entire partition member 30, and overcoming the problem that conventional processes cannot guarantee that the wall of the through hole 31 is completely covered with an insulating layer, which poses a risk of short circuit.

Further, as shown in FIG. 7, a length by which the deformable portion 112 extends toward the middle portion of the through hole 31 is defined as L1, and a thickness of the partition member 30 is defined as L2, where L1≥L2, and 1 mm≤L1≤7 mm and/or 1 mm≤L2≤7 mm.

The thickness L2 of the partition member 30 may range from 1 mm to 7 mm. A too thin partition member 30 cannot provide sufficient support for the structure. A too thick partition member 30 is not conducive to the layout in the space in the battery pack. A length by which the deformable portion 112 protrudes from the through hole 31, i.e., a length of a part of the deformable portion 112 which is to be bent, is defined as L1 and needs to be greater than the thickness of the wall. A range of L1 may also be set to 1 mm≤L1≤7 mm.

In some embodiments, the partition member 30 is a liquid cooling plate provided with a coolant therein, and the battery cell 21 is connected to the liquid cooling plate. The coolant flowing in the liquid cooling plate can not only cool the battery cell 21, but also cool the ejected materials entering the venting channel 23, thereby effectively controlling the temperature of the ejected materials and reducing the impact of the ejected materials on the temperature of other battery cells.

In some other embodiments, the partition member 30 may also be made of other metal materials.

In some other embodiments, one thermal runaway protection member may be provided corresponding to each through hole 31, or an elongated thermal runaway protection member (formed by a plurality of protection members connected together) may be provided for a row of through holes 31. Such a configuration ensures that during venting of one of the battery cells 21 due to thermal runaway, the thermal runaway protection members of other normal battery cells 21 nearby remain intact, and can block the ejected materials from the venting channel 23 from affecting the other normal battery cells.

It should be noted that due to the high temperature and high pressure characteristics of the ejected materials, the ejected materials will splash and spread after entering the venting channel 23, and the temperature and pressure of the ejected materials will decrease. If there is no protective measure, the other normal battery cells 21 are directly exposed to the venting channel 23, and the ejected materials may come into contact with the other normal battery cells 21, which will cause secondary damage, causing the other normal battery cells 21 to be thermally affected or the explosion-proof valves 211 of the other normal battery cells 21 to be damaged, resulting in thermal runaway of the other battery cells 21. Through the arrangement of one thermal runaway protection member for each through hole 31, the thermal runaway protection member can be ruptured by impact of high-pressure ejected materials, and at the same time, the spreading of the ejected materials in the venting channel 23 will not affect other normal battery cells 21, thereby improving the safety of the battery pack.

A working process of the present disclosure is as follows. During assembly, the explosion-proof valve 211 of the battery cell 21, the weakened portion 12, and the through hole 31 on the partition member 30 are always in a straight line. When thermal runaway occurs in the battery cell 21 and an opening threshold of the explosion-proof valve 211 is reached, the explosion-proof valve 211 breaks, and ejected materials (e.g., high-temperature and high-pressure gases, molten materials, etc.) are ejected to the deformable portion 112 and the weakened portion 12 through the explosion-proof valve 211. The weakened portion 12 is ruptured by the high pressure and high temperature of the ejected materials, so that the ejected materials can enter the venting channel 23 through the through hole 31, thereby preventing the high temperature and high pressure of the ejected materials from affecting other battery cells 21. Meanwhile, the deformable portion 112 is deformed to form a protruding annular peripheral edge extending into the through hole 31. Because the length by which the deformable portion 112 extends from the edge of the through hole 31 to the middle portion of the through hole 31 is greater than the thickness of the partition member 30, the protruding peripheral edge can completely cover the wall of the through hole 31, thus insulating the entire partition member 30, and avoiding a more severe risk of short circuit caused by contact of the ejected materials with the non-insulating portion of the partition member 30.

Based on the above, in the battery pack provided by the present disclosure, the thermal runaway protection member 10 is configured to include the protection portion 11 and the weakened portion 12. When thermal runaway occurs in the battery cell 21, the weakened portion 12 can be broken to form an opening, allowing ejected materials to smoothly pass through the opening and enter the venting channel 23. Because the protection portion 11 includes the connection portion 111 and the deformable portion 112, the deformable portion 112 can be deformed to form a protruding annular peripheral edge to cover the wall of the through hole 31 when thermal runaway occurs, to reduce the risk of short circuit caused by contact between high-temperature and high-pressure ejected materials and the wall, thereby improving the safety of the battery pack.

The foregoing are merely preferred embodiments of the present disclosure. It should be pointed out that those having ordinary skills in the art may make several improvements and substitutions without departing from the technical principles of the present disclosure, and such improvements and substitutions shall also fall within the protection scope of the present disclosure. The foregoing illustrates and describes the basic principles, main features and advantages of the present disclosure. It will be apparent to those having ordinary skills in the art that the present disclosure is not limited to the details of the above preferred embodiments. The embodiments are to be regarded as illustrative and non-limiting. The scope of the present disclosure is defined by the appended claims rather than by the foregoing description, and therefore all modifications that come within the meaning and scope of equivalent elements of the claims are intended to be encompassed therein.

In addition, it should be understood that although this specification is described in accordance with various embodiments, it does not mean that each embodiment only contains an independent technical scheme. The description in the specification is only for clarity, and those skilled in the art should regard the specification as a whole, and the technical schemes in the embodiments can also be appropriately combined to form other implementations that can be understood by those skilled in the art.

## Claims

1. A battery pack, comprising:
a battery pack casing (20), wherein a battery cell (21) is arranged in the battery pack casing (20), and the battery cell (21) is provided with an explosion-proof valve (211);
a partition member (30), wherein the partition member (30) is arranged in the battery pack casing (20) and is configured to partition an interior of the battery pack casing (20) into a battery chamber (22) and a venting channel (23), the partition member (30) is provided with a through hole (31) in communication with the battery chamber (22) and the venting channel (23), and the battery cell (21) is arranged in the battery chamber (22); and
a thermal runaway protection member (10), arranged on a side of the partition member (30) close to the battery chamber (22) and configured to cover the through hole (31), wherein the thermal runaway protection member (10) comprises a protection portion (11) and a weakened portion (12), the weakened portion (12) is arranged corresponding to the explosion-proof valve (211),
the protection portion (11), comprising a connection portion (111) and a deformable portion (112), the deformable portion (112) is connected to an outer periphery of the weakened portion (12), the connection portion (111) is connected to an outer periphery of the deformable portion (112), and a side of the connection portion (111) away from the deformable portion (112) is connected to the partition member (30);
wherein when internal pressure of the battery cell (21) is released, ejected materials from the battery cell (21) are discharged into the venting channel (23) through the explosion-proof valve (211), the weakened portion (12), and the through hole (31), and cause the deformable portion (112) to deform to cover a wall of the through hole (31).

2. The battery pack of claim 1, wherein an orthographic projection of the weakened portion (12) on the partition member (30) is located within the corresponding through hole (31).

3. The battery pack of claim 2, wherein the weakened portion (12) and the explosion-proof valve (211) each have an orthographic projection on the partition member (30) in a thickness direction of the partition member (30), and the orthographic projection of the weakened portion (12) is located within the orthographic projection of the explosion-proof valve (211).

4. The battery pack of claim 2, wherein an orthographic projection of the deformable portion (112) on the partition member (30) in a thickness direction of the partition member (30) is located within the through hole (31).

5. The battery pack of claim 4, wherein the deformable portion (112) and the explosion-proof valve (211) each have an orthographic projection on the partition member (30) in the thickness direction of the partition member (30), the orthographic projection of the deformable portion (112) is annular, and an inner periphery of the orthographic projection of the deformable portion (112) is located within the orthographic projection of the partition member (30); and a distance between an inner periphery of the orthographic projection of the deformable portion (112) and an outer periphery of the orthographic projection of the explosion-proof valve (211) in a radial direction of the through hole (31) is defined as D1, wherein 0.5 mm≤D1≤3 mm.

6. The battery pack of claim 4, wherein a length by which the deformable portion (112) extends toward a middle portion of the through hole (31) in a radial direction of the through hole (31) is equal to or greater than a thickness of the wall of the through hole (31), enabling the deformable portion (112) to completely cover the wall of the through hole (31) after deformation.

7. The battery pack of claim 6, wherein in the radial direction of the through hole (31), a length by which the deformable portion (112) extending toward the middle portion of the through hole (31) is defined as L1, wherein 1 mm≤L1≤7 mm;
and/or
the partition member (30) has a thickness defined as L2, wherein 1 mm≤L2≤7 mm.

8. The battery pack of claim 1, wherein an area of an orthographic projection of the deformable portion (112) in the through hole (31) is larger than an area of the wall of the through hole (31).

9. The battery pack of claim 1, wherein the protection portion (11) and the weakened portion (12) are integrally formed, a score (13) is provided at a connection between the weakened portion (12) and the protection portion (11), and the weakened portion (12) is configured to be broken along the score (13) when the internal pressure of the battery cell (21) is released.

10. The battery pack of claim 1, wherein a score (13) is provided in a middle region of the weakened portion (12), and the weakened portion (12) is configured to be broken along the score (13) when the internal pressure of the battery cell (21) is released.

11. The battery pack of claim 10, wherein the score (13) is a closed score or a non-closed score.

12. The battery pack of claim 1, wherein a crease (113) is provided at a junction of the connection portion (111) and the deformable portion (112), and the deformable portion (112) is deformable along the crease (113).

13. The battery pack of claim 12, wherein a projection of the crease (113) coincides with an edge of the through hole (31) in a direction in which the thermal runaway protection member (10) is orthogonally projected on the partition member (30).

14. The battery pack of claim 13, wherein the through hole (31) is a polygonal hole, and the crease (113) comprises a plurality of linear segments.

15. The battery pack of any one of claims 12 to 14, wherein the crease (113) is provided on a side of the thermal runaway protection member (10) facing the through hole (31), and the crease (113) has a thickness less than a thickness of the deformable portion (112) and/or a thickness of the connection portion (111).

16. The battery pack of claim 1, wherein the thermal runaway protection member (10) is an insulating, high-temperature-resistant protection member.

17. The battery pack of claim 16, wherein the insulating, high-temperature-resistant protection member is made of a ceramic material, a fiber material, or a silicate material.

18. The battery pack of claim 1, wherein the partition member (30) is a liquid cooling plate.
